# EUROPEAN PATENT APPLICATION

(11) **EP 4 335 587 A1**
(43) Date of publication of application: **13.03.2024**
(21) Application number: 23193131.2
(22) Date of filing: 24.08.2023
(51) Int. Cl.: B24B 7/17, F16D 65/00

(54) **METHOD OF SURFACE RENEWAL OF BRAKE DISCS, ABRASIVE BRAKE PADS AND MANUFACTURING METHOD THEREOF**

(30) Priority: 07.09.2022 LT 2022535
(71) Applicant: Malisauskas, Andrius, 15145 Vilnius, Pikeliskiu Km. (LT); Pauza, Kestutis, 53148 Kaunas, Slienavos Km. (LT)
(72) Inventor: Malisauskas, Andrius, 15145 Vilnius, Pikeliskiu Km. (LT); Pauza, Kestutis, 53148 Kaunas, Slienavos Km. (LT)
(74) Representative: Klimaitiene, Otilija

(57) **Abstract**

The invention discloses a method of re-surfacing partially worn and uneven surface of motorcycle brake discs, by using special grinding pads with an abrasive surface, and a method of manufacturing these pads. The general concept of the invention comprises the following independent objects: a method of re-surfacing (smoothing) the surface of brake disks, a special grinding brake pad with an abrasive coating, and a method of its production. According to this method of re-surfacing brake discs, it is sufficient to replace the worn brake pads with the aforementioned abrasive pads, and then methodically carry out short and short-term motorcycle rides in a safe area in non-traffic conditions, during which the abrasive pads begin to grind and polish the brake discs periodically, for short periods and with a small force. Over a period of several driving cycles, the abrasive pads grind brake discs to a smoothness suitable for the operation of new brake pads. This method is efficient, suitable for use by any motorcycle owner, does not require special technical repair skills and tools, and saves repair costs.

## Description

### TECHNICAL FIELD

This invention belongs to the technical fields of auto and motorcycle transport and mechanics. In particular, the invention discloses a method of re-surfacing partially worn and uneven working surface of brake discs of a vehicle (such as car, motorcycle, and other similar), special disc surface smoothing pads with an abrasive surface intended for this method, and a method of manufacturing these pads.

### TECHNICAL LEVEL

Proper operation of the brake system is an essential criterion for the operation and safety of motor vehicles, which is also regulated by technical control standards and technical inspection procedures.

Modern auto and motocycle vehicles, including motorcycles, are usually equipped with disc brake systems that use rotor (disc) brakes, in which the brake rotors (discs) are made as a solid rotating surface against which stationary brake friction pads are pressed or compressed, thereby creating a frictional force that slows down the rotation of the brake rotors and thus the wheels of the vehicle. Disc brake systems include at least the following elements:
- brake discs attached to a wheel or wheel hub;
- brake pads, which are pressed with friction to the brake disc during braking;
- brake caliper (also known as support) - a device that secures brake pads on both sides of both surfaces of the brake disc, and includes several other components that control the pressing of brake pads to the disc: brake cylinders, hydraulic control mechanisms (hoses), and others.

Each motorcycle wheel has brakes. Each wheel can have 1 or 2 brake discs, where each brake disc, thanks to the brake caliper, is surrounded by brake pads on both sides, whose pressing against the brake disc is controlled from the central brake system.

Brake pads press on the brake discs with repeated high frictional forces and wear over time. Both brake pads and brake discs wear out during the vehicle's service life. Brake pads, which are made of a special composite friction material, wear significantly faster than metal brake discs. Therefore, the operation of the disc could be continued by replacing only the worn brake pads. However, the main obstacle to continue using the same brake discs with replaced new pads is: unevenness of the surface of worn brake discs, scratches, worn grooves on the working surface, and lateral deformations. This means that the new brake pads are subject to significantly faster wear or even damage by the uneven surface of the brake discs that have been worn so far.

When the brake pads are worn, the following options are available for restoring the technical functionality of the brake system:
- Replace only the brake pads, which, rubbing against the brake discs, would adapt to the uneven surface of the old discs during a certain period of operation. This repair option is not recommended, for the reasons described above, and the functionality of the brake system is not guaranteed;
- Replace both brake pads and brake discs with new ones. Replacing a complete set of brakes with a new one is a fairly expensive repair, and in this case, the cost of new brake discs is the major part of the repair cost;
- To polish, i.e. to re-surface the brake discs that have not yet worn out, and to use the polished brake discs with the new brake pads.

As mentioned, the main obstacle to the continued operation of the same brake discs is the unevenness of the surface or geometry of the discs. Meanwhile, the disc itself may not be worn yet and its thickness may be more than sufficient to continue operating the same disc. For example, discs from some manufacturers are specified to have a minimum operating thickness of 4.5 mm, this minimum thickness may be different for discs from other manufacturers. It is necessary to specify the minimum thickness so that the brake disc would not overheat due to braking friction during braking and, accordingly, brake effectively. Uneven application of braking force, debris, or an uneven friction surface on the brake friction pads can create grooves, channels, or scratches on the brake rotor surfaces. Repeated heating and cooling of the brake rotor (disc), resulting in extreme temperature fluctuations, can additionally cause lateral deformations of brake rotor (disc). Deformations of the brake disc are also possible due to mechanical effects of various origins (for example, hitting an obstacle while moving, or when the motorcycle falls on its side).

Therefore, brake disc surface polishing is a practical and widely used method of brake disc repair.

Brake discs are polished for both cars and motorcycles and similar vehicles. A common polishing procedure is to remove the wheel from the vehicle, then remove the brake disc. After that, the brake disc is inserted into a special grinding machine, where it is rotated, and at the same time, its surface is polished and smoothed with abrasive tools or turning tools. After grinding the disc, it is removed from the machine and installed in the vehicle in reverse order. New brake pads are placed in the caliper (support) of the brake system, the performance and braking effect of which, together with the polished discs, will be appropriate and meet the technical requirements.

A scratched, uneven or deformed brake disc surface can be repaired by using turning machines or grinding to produce a uniform and smooth contact surface of the brake disc with the friction pad, provided that sufficient brake disc material is left as specified by the manufacturer and without compromising structural integrity of the vehicle's braking system. When the thickness of the wears below the minimum safe thickness, such disc cannot safely dissipate the heat generated by the braking, thus cannot ensure the integrity and safe functionality of the brake system, and therefore the disc must be replaced.

In order for the surface of the discs to be uniform, all disc irregularities, such as lateral deformations, must be detected and removed during grinding procedures. Additional causes of brake disc or brake disc lateral deformation defects can also be made by the "human factor" - non-compliance with the assembly methodology provided by the manufacturer, for example, too tight or too loose fastening screws, non-observance of the tightening degree Nm specified by the manufacturer, tightening order of the holding screws, uneven mounting surface, on which the brake disc is mounted in the wheel assembly of a vehicle.

If the brake disc is removed from the vehicle wheel assembly for lathe resurfacing, any problems or defects caused by the attachment of the brake rotor to the vehicle wheel assembly can be pinpointed or corrected by the resurfacing procedure of the working surface. On the other hand, if a resurfaced disc is improperly fitted to the wheel, these lateral deformations can reappear due to installation errors or deformed wheel geometry.

Accordingly, various brake disc resurfacing machines and brake disc lathing machines have been developed for resurfacing brake discs after they have been removed from the wheel assembly.

Some known machines are designed in such a way that only the car wheel can be removed, and the brake disc is ground without removing it from the car wheel assembly (hub). In the case of a motorcycle such an option is not possible due to the different design of the wheel and brake discs.

Patent documents describing means and methods for repairing and grinding brake discs are known. For example, U.S. patents US7640832B2 and US7681478B2 describe computerized automotive brake lathe machines with means for leveling brake discs that utilize an improved disc turning wheel and method for compensating and leveling the braking surfaces of brake discs. Two other US patents, US8180480B2 and US8245609B1, describe sophisticated computerized systems and methods for monitoring and reporting the resurfacing of vehicle brake discs. These inventions and patents disclose systems that are characterized by the complexity, automation of the brake disc renewal process, and such means are typically intended for and used in specialized professional auto repair shops.

Also, various internet sources, forums of auto and motorcycle enthusiasts, www.youtube.com video platform, and others - contain a lot of information on how to grind car and motorcycle brake rotors (discs), but all found sources suggest removing the wheel, disassembling the brakes system, grind the brake disc that was removed separately, and then reassemble the wheel, the system and the other disassembled vehicle components.

All these actions require professional technical repair skills, time, special tools (perform disassembly-assembly, brake disc grinding), and also create a risk that the wheel and brake mechanisms of the motor vehicle that are disassembled and reassembled may be made with errors and do not meet the technical and safety requirements.

### SUMMARY OF THE INVENTION

This invention discloses a method of refurbishing partially worn and uneven working surface of the brake discs of motor vehicles (various cars, motorcycles, tricycles, scooters, mopeds, motor bicycles, quadricycles, electric scooters), their equivalents and their combinations (trailers, semi-trailers, side trailers) and other similar vehicles in which rotor brakes are used, where the brake rotor is a disc (hereinafter "disc(s)"), by using special disc-surface-leveling pads with an abrasive surface intended for this method, and the manufacturing method of these pads.

The invention is presented and based on the example of a motorcycle, but not limited to it, because the brake mechanism of a motorcycle and its monitoring during this procedure of smoothing the surface of the brake discs are relatively simpler and more accessible.

**Technical problem.** The technical problem of this invention is the expensive and technically difficult repair of the brake system of a motor vehicle, when replacing the brake discs with new ones costs a lot, and the methods known in practice to repair the worn uneven surface of the brake discs require professional technical skills, disassembly and assembly of the motorcycle wheel and brake disc, special grinding machines, and other tools that are usually available only in professional car repair shops.

**Solution.** This invention discloses a method and technical means to effectively (quickly, technically uncomplicated, with minimal costs) grind the brake discs of a motor vehicle (motorcycle, scooter) and prepare them for proper use together with new (replaced) brake pads. The invention comprises:
- A specially designed pads with an abrasive surface, which are used in place of brake pads for a short period of time (about an hour), together with used brake discs, the working surface of which is ground and smoothed to the point that it will continue to be suitable and efficient to operate even with new brake pads. These abrasive pads are placed instead of the regular ones, during the aforementioned grinding period;
- A method of manufacturing these pads with an abrasive surface using worn brake pads that can be removed from the same vehicle (car, motorcycle, etc.) that has the brake discs that need to be ground. Such an abrasive pad can be made from a worn brake pad by gluing a layer of abrasive material in place of or on top of the existing friction composite layer;
- The method of smoothing and grinding the braking surface of brake discs using the aforementioned pads with an abrasive surface. According to this method, in order to grind the brake discs, in the case of a motorcycle, it is not necessary to remove the wheels and the brake discs. It is enough to replace the worn brake pads with the aforementioned abrasive pads, and then methodically carry out short and short-term passes on the motorcycle in a safe area in non-traffic conditions, during which periodically, for short periods and with a small pressure force (a small stroke of the brake arm) when applying the brakes, the abrasive pads begin to grind the brakes discs, and over a certain period of time grinds them to a surface smoothness suitable for the operation of new pads.

**Technical effects.** The invention has the following technical effects:
- The resource of brake disk operation is used to the maximum, vehicle (car, motorcycle, etc.) operating costs are saved, it is not necessary to change the brake disks together with the brake pads, which are expensive;
- There is no need for complex and professional technical repair procedures to disassemble the vehicle, remove and grind the brake discs, and then re-install everything, thus avoiding possible errors and violations in the methodology. Also, grinding motorcycle brake discs after they are fixed in a lathe creates an additional risk of lateral deformation of the brake disc after it is removed from the wheel, ground in the lathe, and then reinstalled on the wheel. In this case, a simple part is used, which can be quickly and easily installed and removed by the owner of the vehicle (car, motorcycle, etc.) when changing the brake pads;
- This part is made in a simple way, using a worn brake pad, the rest of which is recycled. Special machines or other professional technical equipment are not required for the production of parts;
- The procedure for grinding brake discs does not last longer than replacing or grinding brake discs on a lathe, disassembling and reassembling vehicle (car, motorcycle, etc.) assemblies;
- Overall, this brake disc repair technology is characterized by environmental friendliness and longer durability of vehicle (car, motorcycle, etc.) parts in operation.

### DESCRIPTION OF DRAWINGS

The essential aspects of the invention are explained in the drawings. Drawings are an integral part of the description of the invention and provided as a reference to the possible embodiment of the invention, but are not intended to limit the scope of the invention. The drawings are schematic and principled, the sizes, proportions and specific implementation options of the objects depicted in them may differ within the scope of the invention.

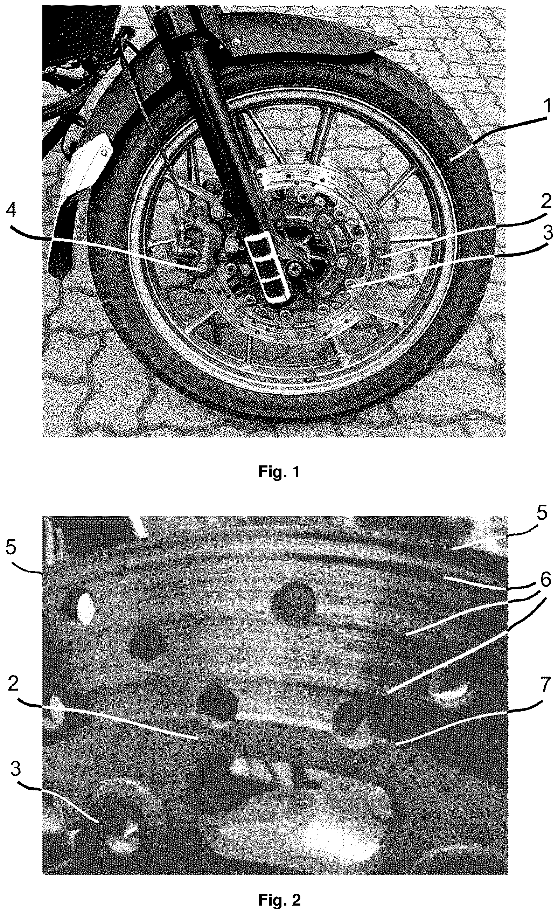

- **Fig. 1**: Motorcycle disc brake system and its components: 1 - wheel; 2 - the brake disc attached to the wheel hub; 3 - screws for fixing the brake disc to the base (ring rivets); 4 - brake system clamp or caliper (also called brake support), which includes brake pads that surround the working surfaces of the brake disc on both sides.
- **Fig. 2**: Defects on the working surface of the brake disc (2) of the motorcycle, which appeared after a longer period of operation, due to wear of the brake pads: 5 - outer wear edge of the working surface of the brake disc; 6 - annular grooves-ridges and scratches; 7 - internal wear edge of the working surface of the brake disc.

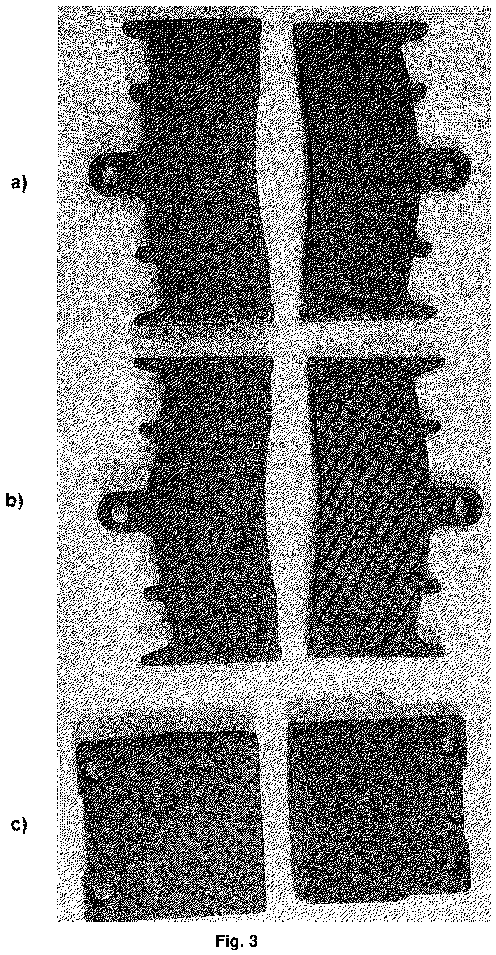

- **Fig. 3**: Abrasive pads made from worn motorcycle brake pads shown on both sides: a) and b) - pads for the front wheel of a motorcycle; c) - pads for the rear wheel of a motorcycle;

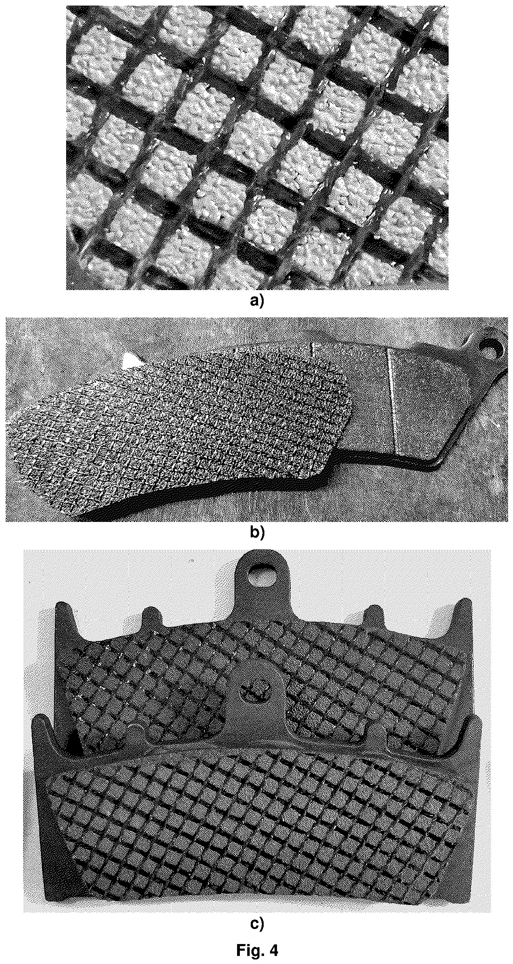

- **Fig. 4**: Examples of a reinforced abrasive coating for forming the surface of an abrasive pad: a) structure of a reinforced abrasive coating showing the abrasive material distributed in segments of the reinforcing mesh; b) abrasive coating blanks for pads; c) manufactured abrasive pads;

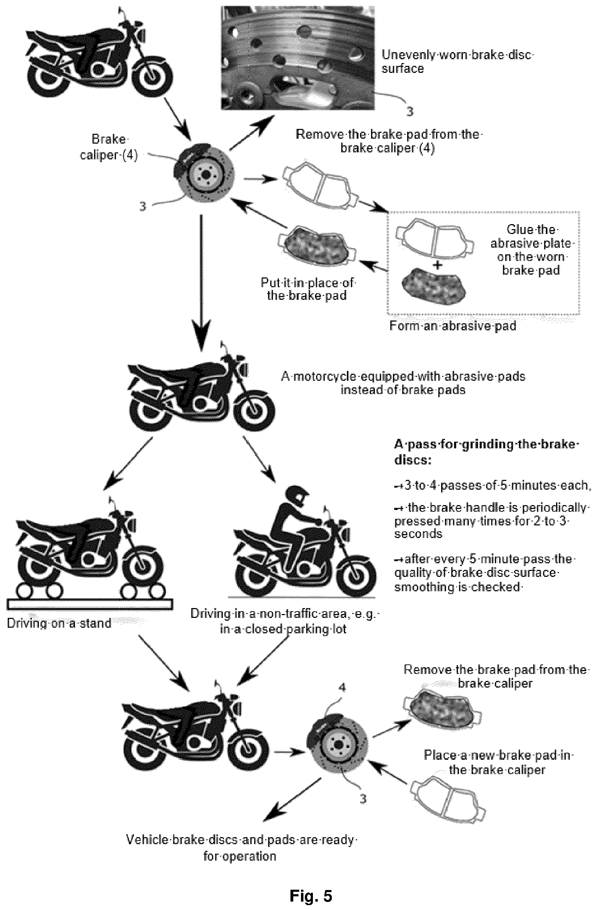

- **Fig. 5**: The process of re-surfacing (levelling) the working surface of brake discs and its stages.

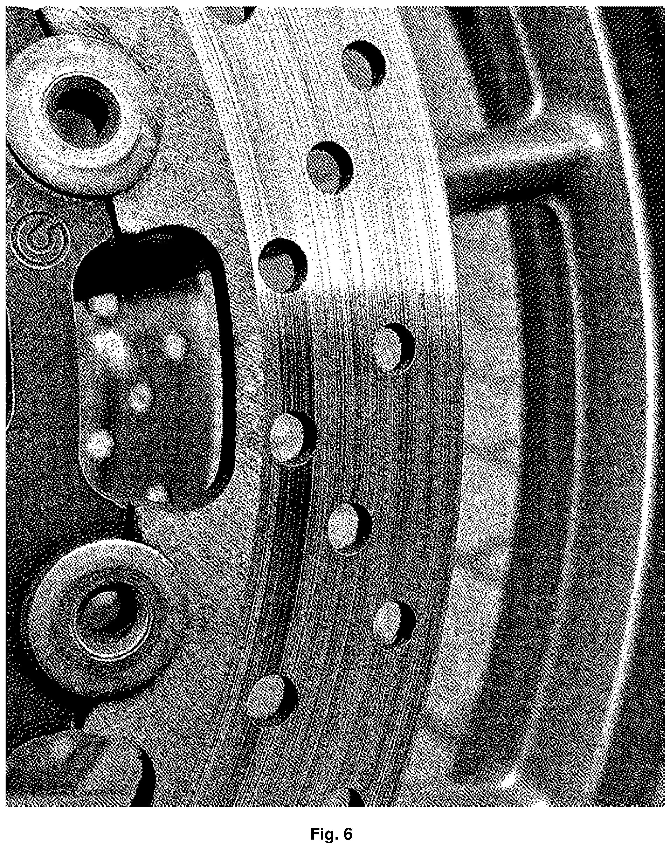

- **Fig. 6**: Brake disc working surface after application of abrasive pads and re-surfacing method. The annular ridges/grooves (6) are gone, also gone are the outer edges (5) and the inner edges (7) caused by the wear of the working surface, and the working surface of the disk has become sufficiently smoothed and suitable for use with new brake pads.

### DETAILED DESCRIPTION OF THE INVENTION

In this section, description of the invention is presented in detail by joining the following independent objects of the invention having common general concept of the invention:
- The method of grinding (re-surfacing) the surface of brake discs without removing the wheel and brake disc from a motor vehicle (for example, a motorcycle),
- The special pad for grinding the working surface of the brake disc with an abrasive coating,
- The manufacturing method of such abrasive pad.

**The method of smoothing the working surface of brake discs.** Unlike other known methods of smoothing the surface of brake discs, this method does not require disassembly of the motorcycle wheel (1) and brake system (2, 3, 4), nor fixing and processing of the brake disc (2) in a lathe. All that needs to be done before grinding the discs is:
- Remove the worn brake pads from the brake system caliper (4);
- In place of the removed brake pads - put the abrasive grinding pads matching the shape of the removed brake pads into the calipers (4), where the brake pads have formed or attached abrasive surfaces instead of or on the surface of the composite layer intended to cause braking friction.

Replacing brake pads with the abrasive pads requires minimal technical skills and time. Generally, the brake pads in the motorcycle brake caliper (4) are fixed with one screw or stud, and its replacement consists of operations such as loosening and removing the brake pad, and installing and fixing the abrasive pad on the stud. Motorcycles with disc brakes often have 2 brake discs with 4 brake pads for the front wheel, and 1 brake disc with 2 brake pads for the rear wheel - for example, a set of interchangeable pads is shown in Fig. 1. If a motorcycle or a specific motorcycle model has a different number of brake discs and pads, then this brake configuration is not a limiting aspect of this invention, the invention is suitable for any number of brake discs and pads.

After replacing the old brake pads with abrasive pads, the process of smoothing and grinding the working surface of the brake discs (3) begins. During its period, several slow and short-term motorcycle rides in a safe area in non-traffic conditions are carried out methodically, during which periodically, for short periods and with a small pressure force (a small stroke of the brake arm) when pressing the brakes, the abrasive pads begin to grind the brake discs (3), and during this over a period of time, they are ground to a smoothness suitable for the use of new pads.

The drive for grinding discs (3) is carried out at approximately 5-15 km/h speed, the most suitable speed is about 10 kilometers per hour.

The recommended duration of one such ride is about 5 minutes. During driving, periodically, in short periods of 2-3 seconds, the brakes are lightly pressed so that the abrasive pad touches the rotating brake disc and grinds the unevenness of the working surface of the brake disc (3). The mentioned 2-3 seconds correspond to several revolutions of the wheel and the brake disk (3) - this means that during this short pressing period the surface of the brake disk will be ground evenly along its entire circular circumference. After 2-3 seconds, the brakes are released, and about the same or slightly more time (3-7 seconds) is driven with the brakes released. This period is intended to cool down the brake disc (3), which gets a little hot during grinding. Accordingly, approximately 20-30 such brake lever pressing-releasing cycles are performed during a 5-minute drive.

After driving for 5 minutes, it is recommended to stop and check the condition and temperature of the working surface of the brake discs (3). It is important to check the temperature of the disks so as not to overheat them. After a pass with abrasive grinding, the discs may be warm.

There can be performed 3 or 4 or more of such passes, each lasting approximately 5 minutes, depending on the irregularities formed on the surface of the brake disc and the efficiency of grinding. The grinding condition of the discs is usually checked visually and by measuring the thickness of the brake disc(s), for example with a caliper gauge. Also, the quality of grinding can be controlled by comparing the surface of the ground disc with the surface of a new, unused brake disc.

After one or two passes, the irregularities of the annular grooves/ridge type (6) and the outer edge (5) and the inner edge (7) formed due to the wear of the disc braking surface are usually smoothed out. For this purpose, the abrasive surface of the abrasive pad can be formed slightly larger than the area of the friction composite layer of the brake pad, which corresponds to the worn working surface of the brake disc.

Subsequent passes - grinding cycles - smooth and grind the entire working surface of the brake disc (3), which normally comes into contact with the brake pads during vehicle braking.

The overall process of leveling and grinding the surface of the brake discs, with its timeouts, can last 20-60 minutes.

Grinding of brake discs is appropriate if, after leveling and grinding, the thickness of the disc remains greater than the specified minimum and is sufficient according to the manufacturer's specification, so that the brake disc can continue to be used. Some manufacturers specify a minimum disc thickness of 4.5 mm, the minimum thickness of other manufacturers and models may differ. It is not recommended to operate a brake disc with less than the minimum thickness specified by the manufacturer. In this case, the brake disc should be replaced with a new one.

After the grinding process of the brake discs is completed, all abrasive pads are removed from the brake calipers (supports) (4), the calipers are cleaned of metal dust as a preventive measure, and new brake pads are placed in them, following the manufacturer's methodological instructions. A properly leveled surface of a ground brake disc is shown in Fig. 6. The smoothed surface no longer has the previous circular irregularities (6) or circumference edges (5, 7). The vehicle's brakes are then ready for use again.

It should be noted that not all brake discs of a vehicle (car, motorcycle, etc.) can be polished at the same time, but individual discs, or even their separate halves (planes) can be polished selectively and as needed. In this case, abrasive pads would be used only for individual brake discs or their individual surfaces, whereas, for discs or their surfaces not being ground, the previous brake pads are left during the process. They will ensure uniform pressing of the abrasive pad and compensate for the possible deformation of the brake disc due to the pressure of the abrasive pad on the opposite side, as well as ensure the braking function. This makes it possible to grind only the surfaces of the brake disc that require it, and the overall thickness of the disc suffers less.

It should be noted that the step of grinding the brake discs can be performed not necessarily while driving the vehicle (car, motorcycle, etc.) outside the traffic area, but also when it is stationary on a stand that allows the vehicle's engine to turn the wheels or the stand itself turns the wheels of the vehicle, when the vehicle is stationary. In this case, the operator only needs to periodically press the brake handle, according to the intended plan, and control the process. There is a large selection of various racks and stands for the repair and maintenance of vehicles (cars, motorcycles, etc.) as needed, starting with a stand only for lifting the rear wheel of a motorcycle (which can be used to grind the rear wheel disc), ending with dynamic stand-lifts, where stationary speed, engine power, braking efficiency and other more complex works are carried out on the fixed vehicle, at various times of the year in workshop or garage conditions, without the driver going to the aforementioned closed off-traffic area.

**The brake pad with an abrasive coating and its production method.** The brake disc grinding pad is the same shape as the brake pad of that particular model of a vehicle (car, motorcycle, etc.). The only difference is the replacement of the friction composite for braking or the coating of its surface with an abrasive coating.

The blank of such an abrasive pad can be a worn out brake pad of a particular model of vehicle (car, motorcycle, etc.), which has no friction composite layer left, or a minimal amount of it left where its braking resource has been used up.

It would be possible to cut a new plate of the same shape as the pad, but it is simpler to use a worn brake pad. And the simplest is to take out the worn brake pads of that particular vehicle (car, motorcycle, etc.), modify them accordingly into abrasive pads, and then use them for one-time or periodic grinding of the surface of the brake discs.

Modification of a brake pad to the abrasive pad is done by attaching, for example, by gluing, an additional surface layer of abrasive material or coating onto the worn remaining layer of friction composite.

The abrasive coating is reinforced and of the appropriate grain structure, which is most suitable for the production of such a pad. Such reinforced coating usually is used for making tools or their parts for metal processing (cutting, grinding).

Examples of reinforced coating are shown in Figure 4: a) structure of reinforced abrasive coating; b) abrasive coating blanks for pads; c) manufactured abrasive pads.

The abrasive coating (its layer) is fixed on the worn surface of the brake pad in the most suitable way of manufacturing and fixing such a pad. The method and means of attaching the abrasive coating should be suitable for subsequent use of the pad in aggressive environments, at high temperatures and under the action of kinetic forces. For example, the abrasive coating layer can be welded to the base plate of the pad, glued with epoxy composite glue or attached by other suitable methods.

**Scope of application of the invention.** Such grinding brake pads and the method of leveling the working surface of brake discs are applicable in practically all rotor brake systems where a disc rotor (disc brakes) is used - these are motor vehicles (cars, motorcycles, tricycles, scooters, mopeds, motorbikes, quadricycles, electric scooters, etc.), and their combinations (trailers, semi-trailers, side trailers) and other vehicles. In the case of some vehicles (cars, etc.), an additional step is required - the removal/installation of the wheel, and it is less convenient to monitor during the disc surface grinding process, compared to motorcycles and similar motor vehicles, where the components of the brake system are more open, easier accessible and in such cases wheel removal/installation is not required.

## Claims

1. A pad for renewing working surface of a brake disc (2) of a vehicle disc-type brake comprising at least a brake disc (2) and a brake pad with a layer of friction composite, which perform braking by means of mutual pressure and friction
**characterized in that**
- instead of the friction composite layer of the brake pad, a layer or coating of an abrasive material intended for grinding metal is attached, or
- said abrasive material layer or coating is attached on top of the friction composite layer of the brake pad.

2. The pad according to claim 1, **characterized in that** the abrasive material attached to it is preferably reinforced and is intended for metal processing.

3. The pad according to claims 1 and 2, **characterized in that** the layer or coating of the reinforced abrasive material is attached to the pad in a way and by means that allow the pad to be used in an aggressive environment, at high temperatures and under the action of kinetic forces, preferably, the abrasive coating is fused or glued to the pad with a composite adhesive.

4. The pad according to claims 1 and 3, **characterized in that** the layer or coating of the reinforced abrasive material is slightly larger than the size of the friction composite layer of the brake pad, in order to grind a larger area of the brake disc than the working area of the disc surface used during braking when the brake pad is applied.

5. A method of resurfacing and grinding brake discs of a vehicle disc-type brake comprising at least a brake disc and a brake pad, which perform braking by mutual compression and friction, comprising at least the following steps:
- at least one brake pad of the vehicle is replaced with an appropriately shaped pad with an abrasive coating in place of the friction composite layer or coated on top of the friction composite layer,
- the motor vehicle is driven in non-traffic conditions, at low speed, periodically pressing the brakes so that at least one abrasive pad grinds at least one working surface of the brake discs,
- wherein driving under these conditions is continued until the grinding surface of the brake disc is sufficiently smoothed and suitable for use with new brake pads.

6. The method according to claim 5, **characterized in that** the driving is carried out at a speed of 5-15 kilometers per hour, preferably, the driving speed is about 10 kilometers per hour.

7. The method according to claims 5-6, **characterized in that** the drive for grinding the brake discs is carried out while the driver is driving the vehicle in a safe area outside of traffic conditions, in the most suitable case, in a closed parking lot.

8. The method according to claims 5-6, **characterized in that** the drive for grinding the brake discs is performed after the vehicle is placed on a stationary stand, where the wheels of the vehicle are turned by its own engine and/or the motor means of the stand itself.

9. The method according to any of claims 5-8, **characterized in that** in the driving is carried out in cycles of one or more passes, where each pass cycle lasts about 5 minutes, and during the pass cycle, about 20-30 brake application cycles are periodically performed with a small force, which must be sufficient for the abrasive pad to grind the rotating surface of the brake disc.

10. The method according to claim 9, **characterized in that**
- the duration of one periodic braking cycle is about 2 to 4 seconds, during which the brake disc must have time to turn several times in order to grind its working surface evenly around its entire circular circumference, and
- the duration of brake release is about 5 to 7 seconds, during which the previously ground disk must have time to cool down so as not to overheat from the grinding friction.

11. The method according to any of claims 5-10, **characterized in that** after the passing cycle, the grinding condition and temperature of the grinding surface of the brake disc are checked, preventing the brake disc from overheating.

12. The method according to any of claims 5-10, **characterized in that** the condition of the grinding working surface of the brake disc is checked visually, also by comparing it with the surface of the new brake disc.

13. The method according to any of claims 5-12, **characterized in that** the thickness of the ground and/or polished brake disc is measured, which must not be less than the minimum thickness of this type of brake disc specified by the disc manufacturer.

14. The method according to any of claims 5-13, **characterized in that** the vehicle is a motor vehicle, such as a car, a motorcycle, a tricycle, a scooter, a moped, a motorized bicycle, a quad bike, electric scooter, and their combinations, such as trailers, semi-trailers, side trailers, and other vehicles with rotor brakes systems where the brake rotor is a disc.
